Europäisches Patentamt

European Patent Office

Office européen des brevets

(19)

(11) Veröffentlichungsnummer: **0 183 101**

**A1**

(12) # EUROPÄISCHE PATENTANMELDUNG

(21) Anmeldenummer: 85114151.5

(22) Anmeldetag: 06.11.85

(51) Int. Cl.⁴: **G 21 C 1/02**

(30) Priorität: 19.11.84 DE 3442236

(43) Veröffentlichungstag der Anmeldung:
04.06.86 Patentblatt 86/23

(84) Benannte Vertragsstaaten:
BE DE FR GB IT NL

(71) Anmelder: INTERATOM Gesellschaft mit beschränkter Haftung
Friedrich-Ebert-Strasse
D-5060 Bergisch Gladbach 1(DE)

(72) Erfinder: Hahn, Günter, Dipl.-Ing.
Am Brücker Bach 42
D-5060 Bergisch-Gladbach 1(DE)

(74) Vertreter: Mehl, Ernst, Dipl.-Ing. et al,
Postfach 22 01 76
D-8000 München 22(DE)

(54) **Flüssigmetallgekühlte Kernenergieanlage mit in den Sicherheitseinschluss integrierten Dampferzeugern.**

(57) Für natriumgekühlte Kernkraftwerke wird vorgeschlagen, die bislang getrennt angeordneten Dampferzeugergebäude in Form besonderer Zellen (4) in den Sicherheitseinschluß (3) zu integrieren, um den Abstand zwischen den Zwischenwärmetauschern (6) und den Dampferzeugern (8) und damit die Länge des Sekundärkreislaufes vom Abstand a auf den Abstand b zu verringern. Dadurch werden Rohrleitungen, Dehnungsschleifen, Isolierungen, Begleitheizungen und Kühlmittel eingespart. Die Zellen (4) sind in der Lage der bei Störfällen freiwerdenden Energie zu widerstehen, z. B. durch Druckentlastung an die Atmosphäre über Kanäle (42). Der Sicherheitseinschluß erfährt hierdurch keine Belastung.

FIG 2

EP 0 183 101 A1

INTERATOM GmbH
D-5060 Bergisch Gladbach

Flüssigmetallgekühlte Kernenergieanlage mit in den
Sicherheitseinschluß integrierten Dampferzeugern

Die vorliegende Erfindung betrifft eine Kernenergieanlage nach dem Oberbegriff des 1. Anspruches. Das Schema einer solchen Kernenergieanlage ist z. B. aus der DE-A-24 45 553 bekannt. Dabei wird als Primär- und Sekundärkühlmittel vorzugsweise Natrium oder eine Natriumlegierung verwendet, während als Tertiärkühlmittel Wasser dient, das in den den Wärmeübergang vom Sekundär- zum Tertiärkühlkreis vermittelnden Wärmetauschern verdampft wird und dann als Arbeitsmittel zum Betrieb von Stromgeneratoren benutzt wird. Der Dampf stellt ein erhebliches Druckenergiepotential dar, das beim Freiwerden z. B. infolge eines größeren Dampferzeugerlecks bis zur schließlichen Kondensation zu einer erheblichen Belastung des einschließenden Gebäudes führt. Diese Belastung kann beherrscht werden durch entsprechende festigkeitsmäßige Auslegung des Gebäudes und/oder ein zu einem raschen Druckabfall führendes Abblasen in die Atmosphäre. Letzteres ist jedoch nur zulässig, wenn, wie im Falle des Sekundär- und Tertiärkühlmittels die abzugebendes Stoffe nicht radioaktiv sind. Bei den bislang ausgeführten Anlagen dieses Typs wurden deshalb Anlageteile, die hochgespanntes Wasser bzw. Dampf führen, in besonderen Gebäuden untergebracht, die getrennt vom eigentlichen Reaktorgebäude angeordnet sind, das den Primär- und den übrigen Teil des Sekundärkreislaufes beinhaltet. Da selbst bei unter-

5.10.84 We/Est

stellten schweren Störfällen wegen des hohen Siedepunktes von Natrium nur geringe Mengen an Kühlmitteldampf freigesetzt werden können, die rasch kondensiert werden, braucht der Sicherheitseinschluß des Reaktorgebäudes nicht gegen hohe innere Druckbelastungen ausgelegt zu werden und seine Fähigkeit, die im Reaktor selbst und im Primärkreislauf enthaltene Radioaktivität gegebenenfalls sicher zurückzuhalten, ist auch ohne den aufwendigen Einbau einer dichten Blechauskleidung gewährleistet. Andererseits wird die Forderung gestellt, daß das Reaktorgebäude Einwirkungen von außen, insbesondere einem Flugzeugabsturz, ausreichenden Widerstand entgegensetzen können soll. Dies führt zur Reaktorgebäuden von zylindrischer und/oder halbkugeliger Form, die wiederum bedingen, daß die Dampferzeugergebäude erst in einigem Abstand davon angeordnet werden können. Die den Sekundärkreislauf bildenden Rohrleitungen werden so verhältnismäßig lang, was eine Reihe von Nachteilen nach sich zieht: Höherer Druckverlust - höherer Wärmeverlust trotz ausgedehnterer Isolierung - aufwendigere Begleitheizung - größere Anzahl von Rohrschleifen zum Ausgleich der behinderten Wärmedehnung - größere Anzahl von prüfpflichtigen Schweißnähten - größeres Kühlmittelvolumen, das seinerseits wieder zu entsprechend vergrößerten Ablaßbehältern usw. zwingt, sowie eine Erhöhung des zur Unterbringung der Anlage erforderlichen Bauvolumens.

Aufgabe der vorliegenden Erfindung ist eine Anordnung der verschiedenen zum Kühlkreislauf einer solchen Kernenergieanlage gehörenden Komponenten derart, daß die o. g. Nachteile vermieden bzw. minimiert werden.

Die Lösung dieser Aufgabe erfolgte durch die im kennzeichnenden Teil des ersten Anspruchs angegebenen Mittel. Nicht radioaktive Anlagenteile, die hochgespanntes Wasser bzw. Dampf enthalten, d. h. die Dampferzeuger mit den erforderlichen Anschlußleitungen können deshalb innerhalb des Sicherheitseinschlusses des Reaktorgebäudes angeordnet werden, weil die sie umschließenden Zellen einem in ihnen stattfindenden Druckaufbau jederzeit widerstehen können, so daß ersterer keinen besonderen Druckbelastungen von innen standhalten muß; in einer durch den zweiten Anspruch definierten bevorzugten Ausführungsform dadurch, daß Möglichkeiten zur Druckentlastung aus den Zellen durch den Sicherheitseinschluß hindurch in die Atmosphäre geschaffen werden. Die einzelnen Komponenten der Wärmeübertragungskreisläufe können dann in unmittelbarer Nachbarschaft zueinander angeordnet werden, was wie oben ausgeführt, in der Folge zu erheblichen Einsparungen an den Anlagekosten führt.

Eine weitere Ersparnis ergibt sich bei einer Ausführung der Anlage entsprechend der im dritten Anspruch vorgeschlagenen Ausgestaltung, da dann der etwa erforderlich werdende Ausbau von Großkomponenten aus den Dampferzeugerzellen mit Hilfe des ohnehin im Reaktorgebäude vorhandenen Krans möglich ist, wogegen bei der herkömmlichen Bauweise die getrennten Dampferzeugergebäude je für sich mit einer entsprechenden Krananlage versehen werden müssen.

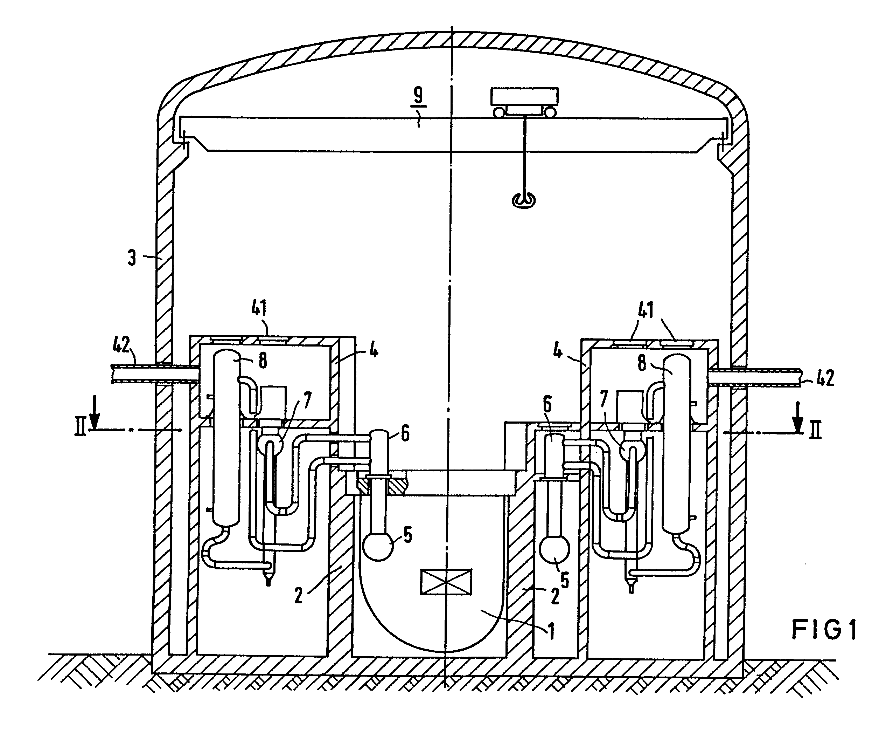

Zwei Ausführungsbeispiele der Erfindung sind in der Zeichnung dargestellt, und zwar zeigt
Figur 1 einen Längsaxialschnitt entsprechend der
    Linie I-I der Figur 2 und
Figur 2 einen Querschnitt entsprechend der Linie II-II der Figur 1, wobei jeweils in der linken Hälfte der Zeichnung die Anwendung der Erfindung auf eine Kernenergieanlage des sogenannten "Pool"-Typs und in der rechten Zeichnungshälfte die Anwendung auf eine Anlage vom sogenannten "Loop"-Typ dargestellt ist.

Beiden Anlagearten gemeinsam ist ein Reaktortank 1, der von einem biologischen Schild 2 umgeben ist. Beim "Pool"-Typ ist der gesamte Primärkreislauf einschließlich einer das Primärkühlmittel umwälzenden Pumpe 5 innerhalb des Reaktortanks 1 angeordnet, ebenso wie Zwischenwärmetauscher 6, in denen der Primärkreislauf seine Wärme an den ebenfalls mit Natrium betriebenen Sekundärkreislauf abgibt.

Beim "Loop"-Typ dagegen sind die Primärpumpe 5 und die Zwischenwärmetauscher 6 außerhalb des Reaktortanks 1 angeordnet. Der Sekundärkreislauf wird durch weitere Pumpen 7 aufrechterhalten und schließt Dampferzeuger 8 ein, in denen tertiärseitig Wasserdampf erzeugt wird, der hier nicht dargestellten Arbeitsmaschinen, vorzugsweise Turbogeneratoren zugeführt wird. Die genannten Anlageteile sind innerhalb eines Sicherheitseinschlusses 3 aus Beton angeordnet, der sowohl äußeren Einwirkungen, wie einem Flugzeugabsturz widerstehen als auch etwaige Aktivitätsfreisetzungen in seinem Inneren zurückhalten kann, die durch mögliche Lecks hervorgerufen werden könnten. Sekundärpumpen 7 und Dampferzeuger 8 sowie die dazugehörigen Rohrleitungen, d. h. diejenigen Anlageteile, bei denen es in Folge von Störfällen zu erheblichen Energiefreisetzungen kommen könnte, sind in besonderen, vom Sicherheitseinschluß 3 unabhängigen Zellen 4 angeordnet, die von ihrer Bauweise her geeignet sind, derartigen Energiefreisetzungen in ihrem Inneren zu widerstehen, vorzugsweise dadurch, daß sie mit Entlastungskanälen 42 versehen sind, die durch die Wand des Sicherheitseinschlusses 3 hindurch ins Freie geführt und im Normalbetrieb z. B. mit hier nicht dargestellten Berstscheiben verschlossen sind. Die Zellen 4 sind an ihrer Oberseite mit Öffnungen 41 versehen, die im Betrieb mit entsprechenden Stopfen verschlossen sind. Sollen Sekundärpumpen 7 oder Dampferzeuger 8 zu Reparaturzwecken ausgebaut werden, so werden diese Stopfen entfernt und die genannten Komponenten können mit Hilfe eines auf einer Kreisbahn am oberen Ende des Sicherheitseinschlusses drehbaren Krans 9 transportiert werden, der ohnehin zur Ausführung entsprechender Arbeiten am Reaktortank 1 vorhanden sein muß.

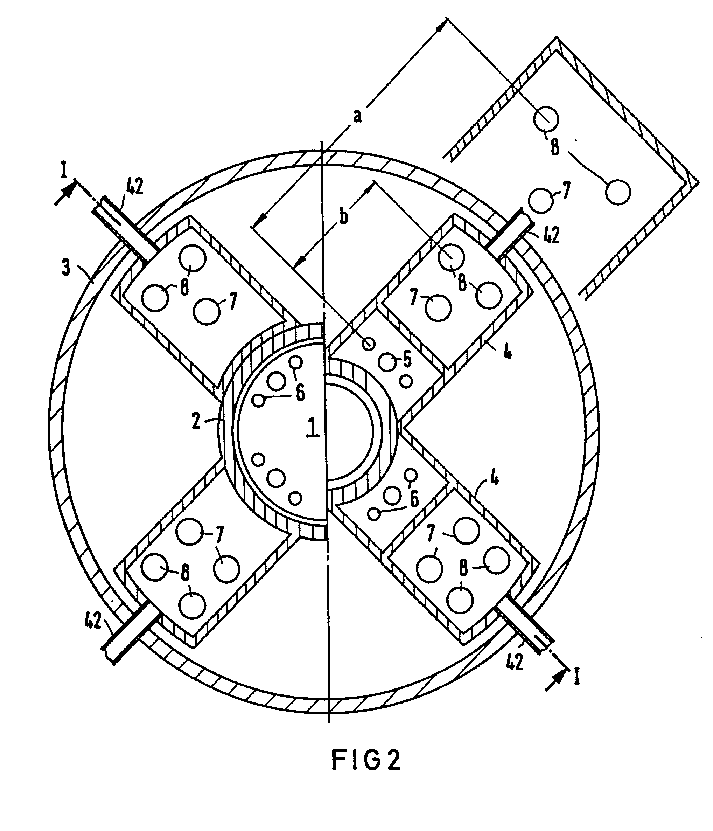

In der Figur 2 ist im oberen rechten Quadranten die nach dem bisherigen Stand der Technik übliche Anordnung von Sekundärpumpen 7 und Dampferzeugern 8 in getrennten Gebäuden dargestellt. Ein Vergleich der mit a bzw. b bezeichneten Entfernungen zwischen den Zwischenwärmetauschern 6 und den Dampferzeugern 8 macht deutlich, wie groß die Verringerung der Abstände und die damit erzielbaren Einsparungen an Rohrleitungen und deren Hilfseinrichtungen sind. In den innerhalb des Sicherheitsanschlusses 3 zwischen den Zellen 4 verbleibenden Zwickeln ist ausreichend Platz vorhanden, um hier nicht dargestellte weitere Einrichtungen der Anlage unterzubringen.

INTERATOM GmbH          -6-
D-5060 Bergisch Gladbach


Flüssigmetallgekühlte Kernenergieanlage mit in den
Sicherheitseinschluß integrierten Dampferzeugern


Patentansprüche


1. Kernenergieanlage, betreibbar mit einem Primärkühlmittel und einem innerhalb des den Reaktor umgebenden Sicherheitseinschlusses (3) im Wärmeaustausch (5) damit stehenden Sekundärkühlmittel, sowie
einem im Wärmeaustausch (8) mit letzterem stehenden
Tertiärkühl- bzw. Arbeitsmittel,
d a d u r c h   g e k e n n z e i c h n e t ,
daß die den Wärmeaustausch zwischen Sekundär- und
Tertiärkühlmittel vermittelnden Anlageteile (8) in
ebenfalls innerhalb des Sicherheitseinschlusses (3)
angeordneten Zellen (4) angeordnet sind, die in der
Lage sind, der bei Störfällen an den in ihnen enthaltenen Anlageteilen freiwerdenden Energie zu widerstehen.


2. Anlage nach Anspruch 1,
d a d u r c h   g e k e n n z e i c h n e t ,
daß die Zellen (4) mit Entlastungskanälen (42) versehen sind, die in die Atmosphäre außerhalb des
Sicherheitseinschlusses (3) öffnen.


3. Anlage nach Anspruch 1 oder 2, mit einem an der Decke
des Sicherheitseinschlusses (3) verfahrbaren Kran (9),
d a d u r c h   g e k e n n z e i c h n e t ,

daß die Zellen (4) an ihrer Oberseite mit über den in ihnen angeordneten Anlageteilen (7, 8) gelegenen Öffnungen (41) versehen sind, die im Betrieb mit herausnehmbaren Stopfen verschließbar sind.

FIG1

FIG 2

Europäisches Patentamt

**0183101**

Nummer der Anmeldung

**EUROPÄISCHER RECHERCHENBERICHT**

EP 85 11 4151

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int Cl 4) |
|---|---|---|---|
| X | CONFERENCE SUR LA SURETE DES REACTEURS RAPIDES, 19.-23. Juli 1982, Lyon, FR; C. AYCOBERRY et al.: "L'après CREYS-MALVILLE: Les perspectives du projet de site intégré" * Seite 3, letzter Absatz; Seite 5, erster Absatz, Punkt 7: "Le circuit intermédiaire"; Figuren 5 und 6 * | 1 | G 21 C 1/02 |
| A | FR-A-2 246 028 (ELECTRICITE DE FRANCE) * Seite 5, Zeilen 26-32; Figuren * & DE - A - 2 445 553 | 1 | |

RECHERCHIERTE SACHGEBIETE (Int. Cl.4)

G 21 C 15/00
G 21 C 1/00
G 21 C 13/00

Der vorliegende Recherchenbericht wurde für alle Patentansprüche erstellt.

| Recherchenort DEN HAAG | Abschlußdatum der Recherche 18-02-1986 | Prüfer ERRANI C. |
|---|---|---|